# EUROPÄISCHE PATENTANMELDUNG

(11) **EP 2 320 262 A1**
(43) Veröffentlichungstag der Anmeldung: **11.05.2011**
(21) Anmeldenummer: 09014043.5
(22) Anmeldetag: 10.11.2009
(51) Int. Cl.: G02B 23/24

(54) **Inspektionsvorrichtung und Verfahren zum Positionieren einer Inspektionsvorrichtung**

(71) Anmelder: Siemens Aktiengesellschaft, 80333 München (DE)
(72) Erfinder: Die Erfindernennung liegt noch nicht vor

(57) **Zusammenfassung**

Es wird eine Inspektionsvorrichtung (1) offenbart, welche einen distalen Bereich (2), einen proximalen Bereich (3) und einen zwischen dem distalen Bereich (2) und dem proximalen Bereich (3) angeordneten flexiblen Bereich (4) umfasst. Dabei umfasst der flexible Bereich (4) eine Anzahl zueinander beweglich angeordneter Segmente (5). Mindestens ein externes Führungselement (6) ist außerhalb des flexiblen Bereiches (4) zwischen dem distalen Bereich (2) und dem proximalen Bereich (3) so angeordnet, dass der distale Bereich (2) mit Hilfe des externen Führungselements (6) in Bezug auf den proximalen Bereich (3) bewegbar ist.

## Beschreibung

Die vorliegende Erfindung betrifft eine Inspektionsvorrichtung und ein Verfahren zum Positionieren einer Inspektionsvorrichtung. Insbesondere bezieht sich die Erfindung auf ein Boroskop für den Einsatz in stationären Gasturbinen.

In der Patentliteratur sind bereits eine Vielzahl an Inspektionswerkzeugen, beispielsweise Endoskope, Bronchoskope, Boroskope und andere, beschrieben. Allerdings sind diese Inspektionswerkzeuge vielfach für eine ganz spezielle Anwendung konzipiert und beispielsweise nicht für den Einsatz in stationären Gasturbinen geeignet. Die Inspektion von Ringbrennkammern bereitet aufgrund der zentral in der Ringbrennkammer angeordneten Nabe typischerweise besondere Schwierigkeiten.

Zum Beispiel wird in GB 2 425 764 B ein Endoskop für die Inspektion von Turbinen beschrieben. Dieses Inspektionswerkzeug beinhaltet im Wesentlichen einen Mechanismus, der aus mehreren einzelnen, kleinen und großen Segmenten besteht, die über einen Seilzug miteinander verbunden sind. Durch das "Spannen" des Seilzugs werden die Segmente aneinander gezogen und bilden dadurch eine vorgegebene Geometrie ab. Somit verfügt der Mechanismus über mindestens zwei "Zustände": der eine ist der nicht gespannte Zustand, dann hängen die einzelnen Segmente lose an den Seilzügen herunter, und der andere Zustand ist der gespannte Zustand, wo die Segmente gegeneinander gespannt sind und eine vordefinierte Geometrie abbilden. Insbesondere sind im ungespannten Zustand die Segmente des beweglichen Teils nicht vollständig aneinander angelagert.

Die Funktionalität des in GB 2 425 765 B offenbarten Inspektionswerkzeugs wird fast ausschließlich durch das Design der Segmente definiert. Die Bewegung der Segmente gegeneinander wird zum Beispiel durch eine einfache, lose Gelenkverbindung in lediglich einer Bewegungsebene erlaubt. Diese lose Gelenkverbindung besteht jeweils im Wesentlichen aus der "Gelenkpfanne" und dem dazugehörigen Gegenstück, wobei ein Segment unabhängig von seiner Form und Länge immer jeweils beide Komponenten aufweist. Diese Gelenkverbindung ist jedoch nur funktionsfähig, solange das Gegenstück des einen Segments in der "Gelenkpfanne" des anderen Segments gelagert ist. Ist dies nicht der Fall, also befindet sich das Gegenstück nicht unmittelbar in der "Gelenkpfanne", dann ist insbesondere die gewünschte Bewegung in nur einer Ebene, also senkrecht zur Rotationsachse der Gelenkverbindung nicht mehr möglich. Durch ein "Auseinandergehen" einzelner Segmente kann es unter anderem auch zu einer Verdrehung bzw. Torsion dieser gegeneinander kommen, wodurch die oben genannte "Endgeometrie" nicht mehr zuverlässig und reproduzierbar erreicht werden kann. Diese Problematik tritt umso häufiger auf, je größer und schwerer die einzelnen Segmente ausgelegt werden.

Das in GB 2 425 764 B beschriebene Inspektionswerkzeug ist ohne weitere Modifikationen für eine Inspektion von stationären Brennkammern nicht geeignet. Dies konnte durch mehrere praktische Untersuchungen gezeigt werden. Insbesondere ist die oben genannte Gelenkverbindung nur eingeschränkt in der Lage eine hohe Positionsgenauigkeit zu gewährleisten, da die einzelnen Segmente nur durch lose Gelenkverbindungen miteinander verbunden sind. Der Kontakt der Segmente untereinander kann bei jedem Entspannen des Inspektionswerkzeugs jederzeit verloren gehen. Dieser Sachverhalt wirkt umso stärker, je größer das Inspektionswerkzeug, in Abhängigkeit von dem zu inspizierenden Bereich, gebaut wird. So ist die Genauigkeit beispielsweise eines Greifwerkzeugs, das auf dem oben genannten Prinzip basiert und für minimalinvasive chirurgische Eingriffe verwendet wird, wesentlich höher. Die Dimensionen eines solchen Werkzeugs bewegen sich jedoch in einem verhältnismäßig kleinen Bereich von schätzungsweise 10 bis 50 cm. Für die Inspektion großer Brennkammern, wie sie beispielsweise stationäre Gasturbinen aufweisen, sind dem gegenüber Dimensionen des Inspektionswerkzeugs im Bereich von zwei bis vier Metern erforderlich. Hier kann die absolute Ungenauigkeit der Position bei mehreren Zentimetern liegen.

Aufgrund der großen Ungenauigkeiten des zuvor beschriebenen Inspektionswerkzeugs in Abhängigkeit von seiner Größe, aber auch aufgrund der dargestellten Problematik der Torsion aufgrund der losen Gelenkverbindung der einzelnen Segmente, ist eine Inspektion von großen Brennkammern, wie sie beispielsweise stationäre Gasturbinen besitzen, nicht mehr möglich.

In EP 0 623 004 B1 wird ein chirurgisches Instrument mit einem lang gestreckten Teil, der dazu dient, beim Gebrauch durch eine begrenzte Öffnung in eine Körperhöhlung eingeführt zu werden, beschrieben. Der lang gestreckte Teil weist eine Mehrzahl von Segmenten auf, die relativ zueinander bewegbar sind. Dabei ist die relative Bewegung der Segmente zueinander durch Anschläge begrenzt.

In EP 1 216 796 A1 wird ein Gasturbineninspektionsgerät offenbart, welches zwei mit Hilfe eines Gelenkes miteinander verbundene Arme umfasst. Die Bewegung der Arme zueinander erfolgt mit Hilfe eines Seilzuges.

In US 2,975,785 ist ein optisches Beobachtungsgerät beschrieben, welches einen flexiblen Bereich umfasst. Der flexible Bereich setzt sich aus einer Anzahl aneinander anliegender Segmente zusammen, durch die Spannseile hindurch laufen. Mit Hilfe der Spannseile lässt sich der flexible Bereich in eine bestimmte Form überführen.

Ein weiteres optisches Beobachtungsinstrument mit einem flexiblen Bereich ist in US 3,270,641 offenbart. Der flexible Bereich umfasst eine Anzahl Segmente, die über Gelenke miteinander verbunden sind. Mit Hilfe von durch die Gelenke hindurch verlaufender Spannseile kann der flexible Bereich bewegt werden.

Weitere Endoskope, bei denen der flexible Bereich mit Hilfe von Spannseilen bewegt wird, sind in US 6,793,622 B2, US 5,846,183, US 2004/0193016 A1, US 3,557,780, US 3,190,286, US 3,071,161, US 2002/0193662 A1, JP 2-215436, DE 691 03 935 T2, DE 696 33 320 T2, JP 7-184829, JP 2-257925 und DE 196 08 809 A1 beschrieben. Weitere Endoskope sind in DE 198 21 401 A1, EP 1 045 665 B1, JP 03103811 A, DE 103 51 013 A1, DE 690 03 349 T2 und DE 22 37 621 offenbart.

Darüber hinaus ist in US 2004/0059191 A1 ein Mechanismus zum Bewegen des Distalendes eines ausgedehnten Inspektionswerkzeugs, beispielsweise eines Boroskops, beschrieben. Dabei erfolgt die Bewegung des Distalendes mit Hilfe eines Seilzugmechanismusses.

In WO 84/02196 ist ein Inspektionsinstrument beschrieben, welches aus Segmenten bestehende flexible Bereiche umfasst. Die flexiblen Bereiche können mit innerhalb der Segmente verlaufender Drähte bewegt werden.

In US 4,659,195 ist ein Boroskop mit einem flexiblen, einteilig ausgeführten Bereich offenbart. Mit Hilfe von vier Kontrollkabeln kann der flexible Bereich in verschiedene Richtungen gebogen werden.

In DE 43 05 376 C1 ist ein Schaft für medizinische Instrumente offenbart, der Segmente, die gelenkig oder kraftschlüssig mit Spanndrähten verbunden sind, offenbart. Mit Hilfe von Steuerdrähten, welche die Segmente durchlaufen, lassen sich verschiedene Krümmungen des Schafts einstellen. In DE 34 05 514 A ist ein Technoskop beschrieben, welches einen distalen flexiblen Bereich umfasst. Der distale flexible Bereich ist mit innen liegenden Steuerdrähten uneingeschränkt ablenkbar. Zudem kann der distale flexible Bereich gelenkig miteinander verbundene Segmente aufweisen.

Vor diesem Hintergrund ist es eine erste Aufgabe der vorliegenden Erfindung, eine vorteilhafte Inspektionsvorrichtung zur Verfügung zu stellen. Eine zweite Aufgabe besteht darin, ein vorteilhaftes Verfahren zum Positionieren einer Inspektionsvorrichtung in einem Hohlraum zur Verfügung zu stellen.

Die erste Aufgabe wird durch eine Inspektionsvorrichtung nach Anspruch 1 gelöst. Die zweite Aufgabe wird durch ein Verfahren zum Positionieren einer Inspektionsvorrichtung in einem Hohlraum nach Anspruch 9 gelöst. Die abhängigen Ansprüche enthalten weitere, vorteilhafte Ausgestaltungen der Erfindung.

Die erfindungsgemäße Inspektionsvorrichtung umfasst einen distalen Bereich, einen proximalen Bereich und einen zwischen dem distalen Bereich und dem proximalen Bereich angeordneten flexiblen Bereich. Der flexible Bereich umfasst eine Anzahl zueinander beweglich angeordneter Segmente. Mindestens ein externes Führungselement ist außerhalb des flexiblen Bereiches zwischen dem distalen Bereich und dem proximalen Bereich so angeordnet, dass der distale Bereich mit Hilfe des externen Führungselementes in Bezug auf den proximalen Bereich bewegbar ist. Das externe Führungselement erlaubt insbesondere in engen Hohlräumen ein gezieltes Manövrieren des flexiblen Bereiches. Auf diese Weise können mit Hilfe der erfindungsgemäßen Inspektionsvorrichtung auch schwer zugängliche Bereiche erreicht werden.

Das externe Führungselement kann vorteilhafterweise als Seil, insbesondere als Drahtseil, oder als Kette ausgestaltet sein. Weiterhin kann der distale Bereich mit einem Sensor, beispielsweise mit einer Inspektionskamera, ausgestattet sein.

Das externe Führungselement kann an dem distalen Bereich und/oder an dem proximalen Bereich befestigt sein. Vorzugsweise ist das externe Führungselement mit einem ersten Ende an dem distalen Bereich befestigt und ein zweites Ende des externen Führungselements ist lose mit dem proximalen Bereich verbunden, sodass das externe Führungselement von dem proximalen Bereich aus bedient, also zum Beispiel angezogen oder gelockert, werden kann.

Weiterhin können der distale Bereich und/oder der proximale Bereich eine Anzahl zueinander beweglich angeordneter Segmente umfassen. Bei diesen Segmenten kann es sich um dieselben Segmente handeln, aus denen auch der flexible Bereich aufgebaut ist. Vorteilhafterweise kann das externe Führungselement, beispielsweise das Drahtseil, an dem äußeren Segment des distalen Bereiches befestigt sein. Zudem kann das zweite Ende des externen Führungselements mit einem Segment des proximalen Bereichs verbunden sein oder durch Öffnungen des Segments hindurch verlaufen. Dabei kann die Verbindung so ausgestaltet sein, dass mit Hilfe des externen Führungselements der Abstand zwischen dem distalen Bereich und dem proximalen Bereich eingestellt werden kann.

Darüber hinaus können die Segmente mit Hilfe mindestens eines internen Seiles, beispielsweise eines Zugseils, miteinander verbunden sein. Dabei können sowohl die Segmente des flexiblen Bereiches untereinander verbunden sein, als auch die Segmente des flexiblen Bereiches mit den Segmenten des distalen Bereiches und/oder mit den Segmenten des proximalen Bereiches. Bei dem internen Seil handelt es sich vorteilhafterweise um ein Drahtseil. Vorzugsweise umfasst die Inspektionsvorrichtung zwei interne Drahtseile. Dabei können die beiden Drahtseile im distalen Bereich zu einem Seil miteinander verbunden sein.

Das interne Seil bzw. die internen Seile können durch Bohrungen in den Segmenten durch die Segmente hindurch geführt sein. Beispielsweise können die Segmente in der Form von Hohlzylindern ausgestaltet sein. In diesem Fall kann das Seil beziehungsweise können die Seile parallel zu einer gedachten Längsachse des jeweiligen Segmentes verlaufen. Im Falle von zwei Seilen können diese vorzugsweise in Bezug auf die Längsachse des Segmentes einander gegenüberliegend angeordnet sein. Vorzugsweise sind die Segmente an den jeweiligen Grund- bzw. Deckflächen miteinander verbunden beziehungsweise liegen an den jeweiligen Grundflächen beziehungsweise Deckflächen aneinander an.

Darüber hinaus kann mindestens ein Segment die Form eines Hohlzylinders mit einer Anzahl Öffnungen in der Mantelfläche des Hohlzylinders aufweisen. Durch eine derartige Ausgestaltung der Segmente lässt sich das Gewicht der Inspektionsvorrichtung erheblich reduzieren, ohne dass dies zu Lasten der Stabilität der Inspektionsvorrichtung erfolgt.

Weiterhin können die Segmente eine in Bezug auf eine gedachte Längsachse des Segments abgeschrägte Grundfläche und/oder eine abgeschrägte Deckfläche aufweisen. Durch die Form der Segmente, insbesondere die Winkel zwischen der Längsachse und der Grundfläche beziehungsweise der Deckfläche des jeweiligen Segments in Verbindung mit der spezifischen Anordnung der Segmente wird die Geometrie vorgegeben, die sich mit Hilfe des flexiblen Bereiches einstellen lässt.

Zusätzlich können mindestens zwei der genannten Segmente, vorzugsweise alle Segmente, gelenkig und/oder formschlüssig miteinander verbunden sein.

Die Inspektionsvorrichtung kann beispielsweise als Boroskop, insbesondere als Boroskop zur Inspektion von Ringbrennkammern, ausgestaltet sein. Das Boroskop kann zum Beispiel aus einer Titanlegierung bestehen bzw. eine Titanlegierung umfassen.

Im Falle der Anwendung der erfindungsgemäßen Vorrichtung im Rahmen der Untersuchung einer Brennkammer kann der distale Bereich, der flexible Bereich und zumindest ein Teil des proximalen Bereiches durch einen Flansch für einen Flammendetektor in die Brennkammer eingeführt werden.

Das erfindungsgemäße Verfahren zum Positionieren einer Inspektionsvorrichtung in einem Hohlraum bezieht sich auf eine Inspektionsvorrichtung, die einen distalen Bereich, einen proximalen Bereich, einen zwischen dem distalen Bereich und dem proximalen Bereich angeordneten flexiblen Bereich und mindestens ein externes Führungselement umfasst. Dabei ist das externe Führungselement außerhalb des flexiblen Bereiches zwischen dem distalen Bereich und dem proximalen Bereich angeordnet. Im Rahmen des erfindungsgemäßen Verfahrens wird der distale Bereich mit Hilfe des externen Führungselements in Bezug auf den proximalen Bereich bewegt.

Das erfindungsgemäße Verfahren kann insbesondere mit Hilfe der erfindungsgemäßen Inspektionsvorrichtung durchgeführt werden. Der distale Bereich kann zum Beispiel einen Sensor, beispielsweise eine Videokamera, umfassen.

Als externes Führungselement kann vorteilhafterweise ein externes Seil, beispielsweise ein Drahtseil, oder eine Kette verwendet werden.

Zudem kann der flexible Bereich eine Anzahl zueinander beweglich angeordneter Segmente umfassen. Dabei können die Segmente mit Hilfe mindestens eines internen Seiles miteinander verbunden sein. Vorteilhafterweise können der distale Bereich und der flexible Bereich durch eine Öffnung in einen Hohlraum, beispielsweise eine Ringbrennkammer, eingeführt werden. Während des Einführens ist das interne Seil entspannt, das heißt, die Segmente können sich relativ zueinander bewegen. Dabei kann der distale Bereich mit Hilfe des externen Führungselements an den proximalen Bereich herangeführt werden. Anschließend kann das interne Seil gespannt werden. Dadurch kann der distale Bereich von dem proximalen Bereich entfernt werden. Im Falle der Ausgestaltung des externen Führungselements als externes Seil kann dieses externe Seil beim Heranführen des distalen Bereichs an den proximalen Bereich angespannt werden. Während des Entfernens des distalen Bereiches von dem proximalen Bereich kann anschließend das externe Seil entspannt werden. Insbesondere kann der flexible Bereich während der distale Bereich an den proximalen Bereich herangeführt ist eine Schleife bilden.

Zum Beispiel können der distale Bereich und der flexible Bereich durch eine Öffnung in eine Komponente einer Gasturbine, beispielsweise eine Brennkammer, eingeführt werden. Die Brennkammer kann insbesondere eine Nabe aufweisen. Beim Einführen des distalen Bereiches und des flexiblen Bereiches können diese Bereiche an der Nabe vorbeigeführt werden. Dies kann insbesondere dadurch erreicht werden, dass der distale Bereich zunächst mit Hilfe des externen Führungselements, insbesondere des externen Drahtseiles, an den proximalen Bereich herangeführt wird, wobei der flexible Bereich die Form einer Schleife annimmt. Anschließend wird durch Spannen des internen Seils der distale Bereich von dem proximalen Bereich entfernt und zu dem zu untersuchenden Bereich der Brennkammer hingeführt. Bei der Brennkammer kann es sich insbesondere um eine Ringbrennkammer handeln.

Das erfindungsgemäße Verfahren erlaubt ein gezieltes Manövrieren von insbesondere langen Inspektionsvorrichtungen, beispielsweise Boroskopen, in schwer zugänglichen Räumen, wie beispielsweise Ringbrennkammern mit Nabe.

Mit Hilfe der erfindungsgemäßen Inspektionsvorrichtung und des erfindungsgemäßen Verfahrens lassen sich insbesondere Brennkammern von Gasturbinen schnell und effektiv auf mögliche Fehler untersuchen. Da mit Hilfe der erfindungsgemäßen Inspektionsvorrichtung und des erfindungsgemäßen Verfahrens auch üblicherweise schwer zugängliche Bereiche im Inneren der Brennkammer schnell und einfach zugänglich und zu untersuchen sind, verkürzt sich die Inspektionszeit und damit die Zeit des Stillstandes der Gasturbine erheblich. Gleichzeitig wird auf diese Weise die Verfügbarkeit und Flexibilität der Gasturbine bzw. der Brennkammer erhöht. Insbesondere lassen sich mit Hilfe der erfindungsgemäßen Inspektionsvorrichtung und des erfindungsgemäßen Verfahrens schnell und einfach angegriffene oder zerstörte Keramikhitzeschilde auffinden.

Weitere Vorteile, Eigenschaften und Merkmale der vorliegenden Erfindung werden nachfolgend anhand eines Ausführungsbeispiels unter Bezugnahme auf die beigefügten Figuren näher erläutert. Die beschriebenen Merkmale sind dabei einzeln als auch in Kombination miteinander vorteilhaft.
- Fig. 1: zeigt schematisch ein erfindungsgemäßes Boroskop.
- Fig. 2: zeigt schematisch eine Verbindung zwischen zwei Segmenten nach dem Stand der Technik aus GB 2 425 764 B.
- Fig. 3: zeigt schematisch die mit einer Videokamera ausgestattete Spitze des Boroskops.
- Fig. 4: zeigt schematisch ein Beispiel für die Funktionsweise des flexiblen Bereiches des Boroskops.
- Fig. 5: zeigt schematisch ein Beispiel für ein Boroskop zur Untersuchung des oberen Bereiches einer Brennkammer.
- Fig. 6: zeigt schematisch ein Beispiel für ein Boroskop zur Untersuchung des unteren Bereiches einer Brennkammer.
- Fig. 7: zeigt schematisch das in die Brennkammer eingeführte Boroskop bei angespanntem externem Drahtseil.
- Fig. 8: zeigt schematisch das in die Brennkammer eingeführte Boroskop bei angespannten internen Drahtseilen und lockerem externen Drahtseil.
- Fig. 9: zeigt beispielhaft eine Gasturbine in einem Längsteilschnitt.
- Fig. 10: zeigt eine Gasturbinenbrennkammer.

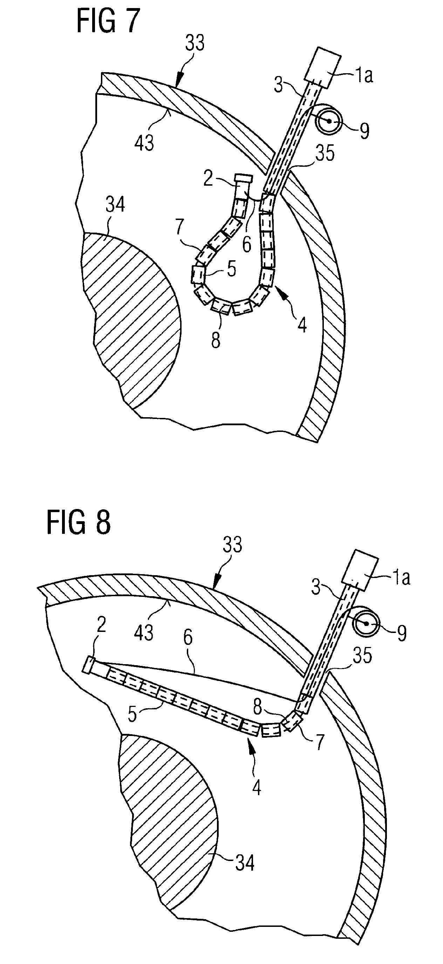

Die Figur 9 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

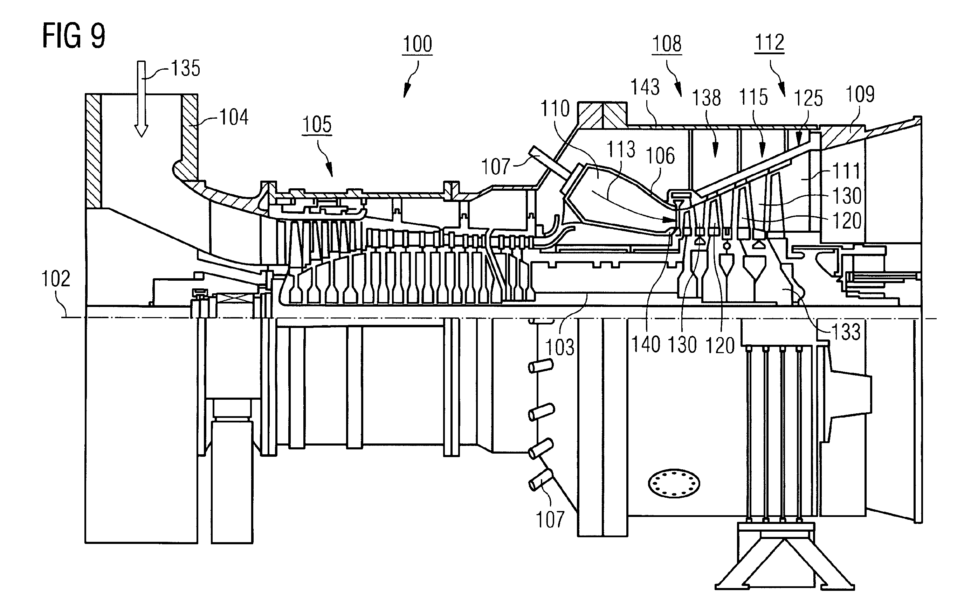

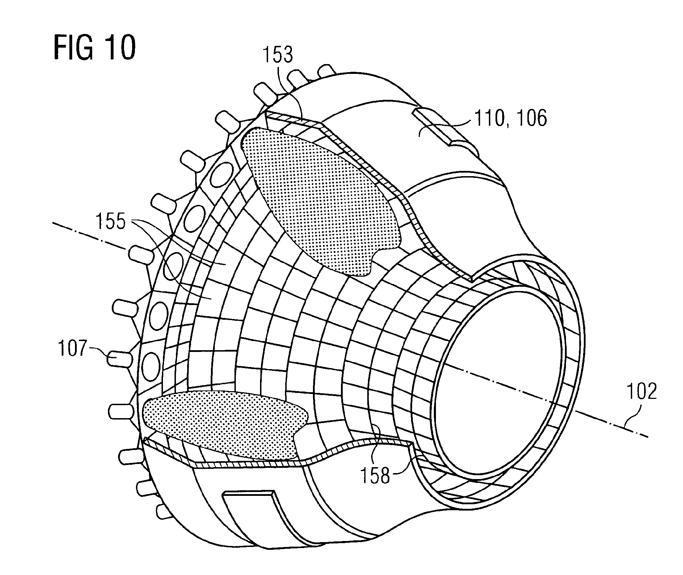

Die Figur 10 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

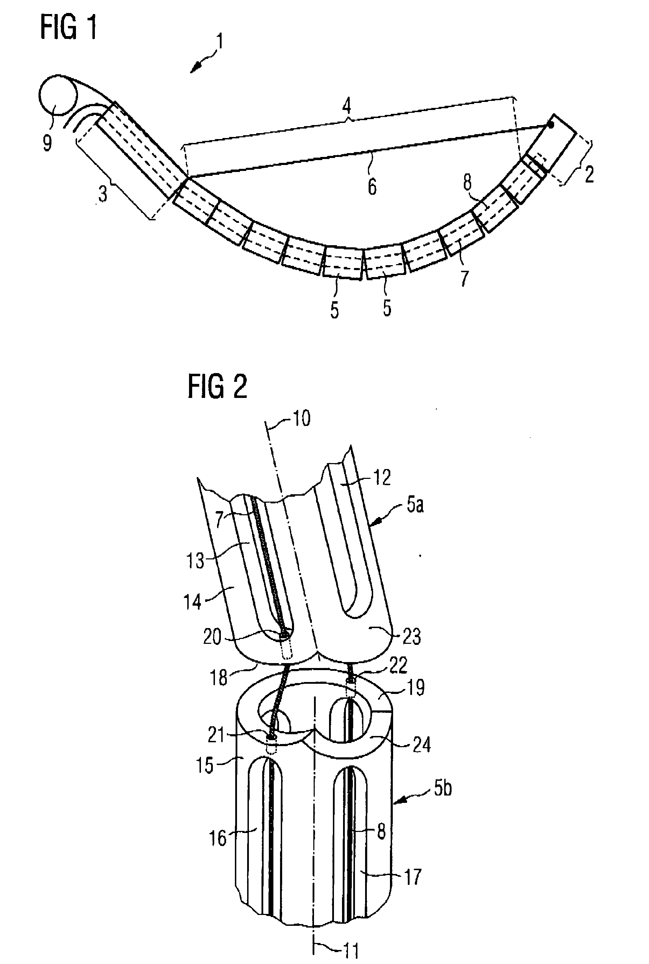

Im Folgenden wird die erfindungsgemäße Inspektionsvorrichtung und das erfindungsgemäße Verfahren anhand der Figuren 1 bis 8 näher erläutert. Die Figur 1 zeigt schematisch eine erfindungsgemäße Inspektionsvorrichtung, die als Boroskop 1 ausgestaltet ist. Das Boroskop 1 umfasst einen distalen Bereich 2, einen flexiblen Bereich 4 und einen proximalen Bereich 3. Der flexible Bereich 4 ist zwischen dem proximalen Bereich 3 und dem distalen Bereich 2 angeordnet. Der flexible Bereich 4 umfasst eine Anzahl Segmente 5. Der distale Bereich 2 und/oder der proximale Bereich 3 können ebenfalls eine Anzahl Segmente umfassen.

Die Segmente 5 sind mit Hilfe von im Inneren der Segmente 5 angeordneten Drahtseilen 7 und 8 miteinander verbunden. Bei den Drahtseilen 7 und 8 kann es sich auch um lediglich ein Drahtseil handeln, welches zunächst durch die Segmente 5 vom proximalen Bereich 3 zum distalen Bereich 2 hinläuft, im distalen Bereich 2 umgelenkt wird und anschließend durch die Segmente 5 zum proximalen Bereich 3 zurückgeführt wird.

Die Segmente 5 können die Form von Hohlzylindern haben, wobei die Grundfläche und/oder die Deckfläche in Bezug auf eine gedachte Längsachse des Segments abgeschrägt ausgestaltet sein kann. Die internen Drahtseile 7, 8 sind vorzugsweise im Wandbereich der jeweiligen Hohlzylinder angeordnet und verlaufen parallel zur Längsachse der jeweiligen Hohlzylinder. Durch die zentrale Öffnung des Hohlzylinders kann eine Sonde, beispielsweise eine Videokamera, vom proximalen Bereich 3 zum distalen Bereich 2 durchgeführt werden.

Der distale Bereich 2 ist mit dem proximalen Bereich 3 über ein externes Drahtseil 6 verbunden. Anstelle des Drahtseils 6 kann auch eine Kette verwendet werden. Das externe Drahtseil 6 verläuft außerhalb der Segmente 5 des flexiblen Bereichs 4. Vorzugsweise ist das externe Drahtseil 6 mit seinem ersten Ende an dem distalen Bereich 2, insbesondere an dem äußersten Segment des distalen Bereichs 2, befestigt. Das zweite Ende des externen Drahtseils 6 wird vorzugsweise im Inneren des proximalen Bereichs 3 entlang geführt und auf eine Winde 9 aufgewickelt. Mit Hilfe der Winde 9 kann das externe Drahtseil 6 je nach Bedarf angezogen beziehungsweise gespannt oder gelockert werden.

Die internen Drahtseile 7, 8 können ebenfalls in einem lockeren Zustand oder in einem angespannten Zustand sein. In lockerem Zustand der internen Drahtseile 7, 8 hängen die Segmente 5 des flexiblen Bereichs 4 lose aneinander. Werden die internen Drahtseile 7, 8 straff gezogen, so bildet der flexible Bereich 4 je nach Form, Anordnung und Größe der Segmente 5 eine vorgegebene Geometrie ab.

Das Boroskop kann zum Beispiel aus einer Titanlegierung bestehen bzw. eine Titanlegierung umfassen.

Die Figur 2 zeigt schematisch die Verbindung zwischen zwei Segmenten eines Boroskops gemäß dem Stand der Technik aus GB 2 425 764 B. Die Figur 2 zeigt zwei Segmente 5a und 5b, die jeweils die Grundform eines Hohlzylinders aufweisen. Die Längsachse des Segments 5a ist durch die Bezugsziffer 10 gekennzeichnet. Die Längsachse des Segments 5b ist durch die Bezugsziffer 11 gekennzeichnet. Die Mantelfläche des Segments 5a ist durch die Bezugsziffer 14 gekennzeichnet und die Mantelfläche des Segments 5b ist durch die Bezugsziffer 15 gekennzeichnet. Im Bereich der Mantelfläche 14 hat das Segment 5a eine Anzahl Öffnungen 12, 13. In gleicher Weise umfasst die Mantelfläche 15 Öffnungen 16, 17.

Die Grundfläche 18 des Segments 5a weißt in Richtung der Deckfläche 19 des Segments 5b. In der Grundfläche 18 des Segments 5a befindet sich eine Bohrung 20, die von der Grundfläche 18 hin zur Öffnung 13 verläuft. In Bezug auf die Längsachse 10 befindet sich auf der gegenüberliegenden Seite der Bohrung 20 eine analoge Bohrung in der Grundfläche 18. Entsprechend befinden sich in der Deckfläche 19 des Segments 5b in Bezug auf die Längsachse 11 einander gegenüberliegend angeordnete Bohrungen 21 und 22, die jeweils von der Deckfläche 19 zu der jeweiligen Öffnung 16 beziehungsweise der ihr gegenüberliegenden Öffnung verlaufen. Durch die Bohrungen 20 und 21 ist ein Drahtseil 7 gezogen, mit welchem die Segmente 5a und 5b miteinander verbunden sind. In analoger Weise ist durch die Bohrung 20 und die ihr entsprechende Bohrung in dem Segment 5a ein weiteres Drahtseil 8 gezogen.

Das Segment 5a umfasst im Bereich seiner Grundfläche 18 einen Gelenkkopf 23. Das Segment 5b umfasst im Bereich seiner Deckfläche 19 eine Gelenkpfanne 24. Die Gelenkpfanne 24 ist so angeordnet, dass der Gelenkkopf 23 beim Spannen der Drahtseile 7 und 8 in die Gelenkpfanne 24 eingreift.

Die Figur 2 zeigt, dass im Falle lockerer Drahtseile 7 und 8, beispielsweise beim Einführen des Boroskops, kein Kontakt zwischen den Segmenten 5a und 5b besteht und dadurch auch keine Funktionsfähigkeit der Gelenkverbindung hergestellt ist. Die Bewegung der Segmente 5a und 5b gegeneinander ist in diesem Fall in keiner Weise beschränkt, wodurch sich eine hohe Ungenauigkeit bei der Positionierung des Boroskops ergibt.

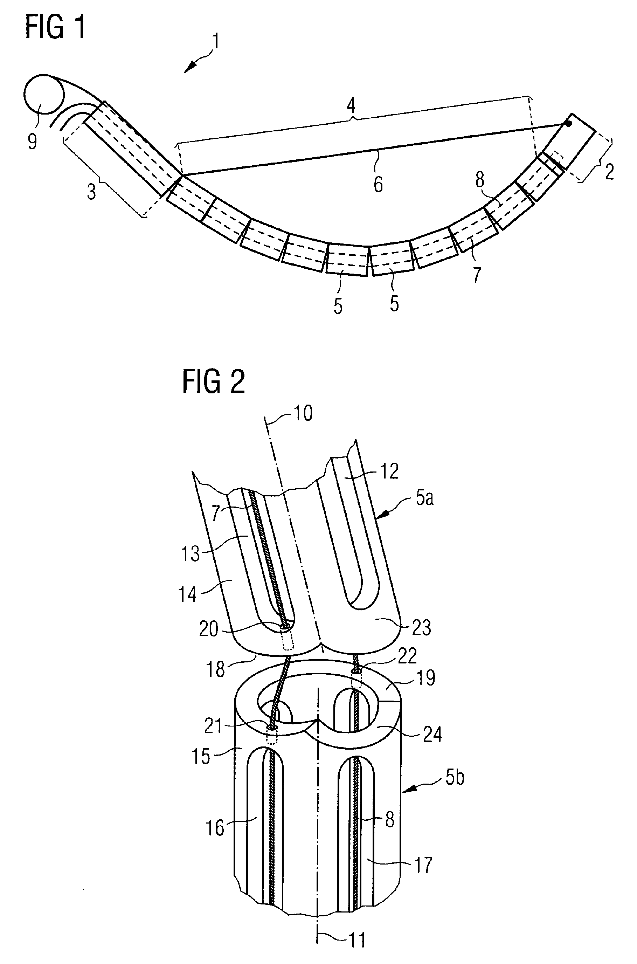

Die Figur 3 zeigt schematisch den distalen Bereich 2 des Boroskops 1, bzw. die Spitze des Boroskops 1. Der distale Bereich 2 des Boroskops 1 besteht aus einem Segment 5e.

Das Segment 5e hat die Form eines Hohlzylinders mit einer angespitzten Deckfläche 19 und einer Mantelfläche 37. Die Mantelfläche 37 umfasst Öffnungen 31, die sich entlang einer gedachten Längsachse 39 des Segments 5e erstrecken.

Das Segment 5e unterscheidet sich von den zuvor beschriebenen Segmenten dadurch, dass die internen Drahtseile 7 und 8 mit dem Segment 5e fest verbunden sind. Zum Beispiel können die internen Drahtseile 7 und 8 in den in der Deckfläche 19 befindlichen Bohrungen 30 fest verankert sein. Durch die entlang der Längsachse des Segments 5e angeordnete kanalförmige Öffnung 36, beziehungsweise durch den entsprechenden Hohlraum 36, ist ein Sensor 32, bei dem es sich zum Beispiel um eine Videokamera handeln kann, hindurch geschoben. Mit Hilfe dieses Sensors 32 kann zum Beispiel der Innenraum einer Brennkammer untersucht werden.

Die Figur 4 zeigt schematisch ein Beispiel für die Funktionsweise des flexiblen Bereiches 4 des Boroskops 1 und ein Beispiel für eine Ausgestaltung des flexiblen Bereiches 4. Der sich an den distalen Bereich 2 anschließende flexible Bereich 4 umfasst eine Anzahl Segmente 5f und 5g. Jeweils einander benachbart angeordnete Segmente 5f beziehungsweise 5g sind miteinander verbunden.

Die Segmente 5f haben eine hohlzylindrische Form, wobei Grundfläche und Deckfläche zueinander parallel verlaufen. Die Segmente 5g haben ebenfalls eine hohlzylindrische Form, wobei die Grundfläche und/oder die Deckfläche jedoch in Bezug auf die Längsachse des jeweiligen Hohlzylinders abgeschrägt sind. Durch eine entsprechende Aneinanderreihung von Segmenten 5f und Segmenten 5g wird im angespannten Zustand der Zugseile 7 und 8 des Boroskops 1 eine vorgegebene Geometrie erzielt. Insbesondere kann das Boroskop 1 im angespannten Zustand, also wenn die internen Drahtseile 7 und 8 angespannt sind, bestimmte Krümmungen aufweisen. Auf diese Weise lassen sich nur schwer zugängliche Bereiche beispielsweise einer Brennkammer untersuchen.

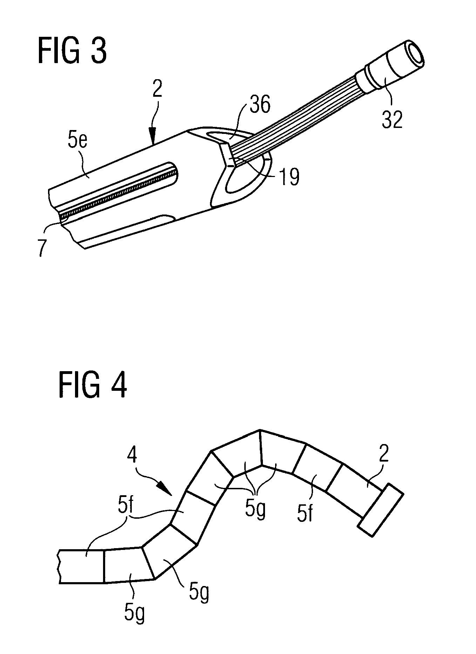

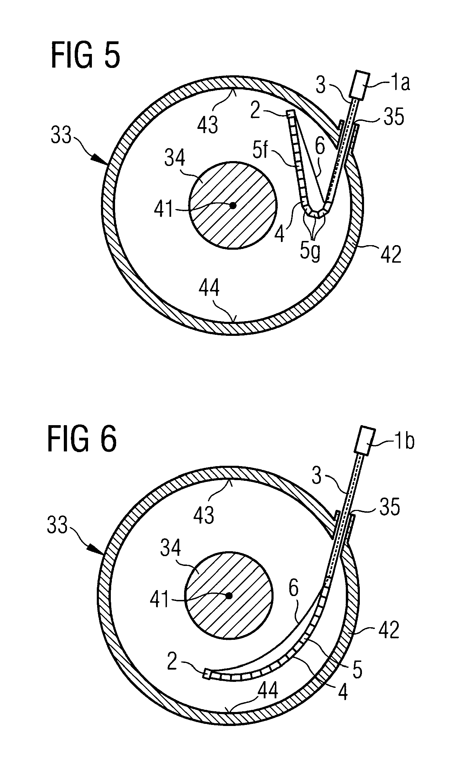

Die Figur 5 zeigt ein erfindungsgemäßes Boroskop 1a, welches sich zur Untersuchung des oberen Bereiches einer Brennkammer eignet. Die Figur 7 zeigt einen Schnitt durch eine Brennkammer 30 senkrecht zur Mittelachse 41 der Brennkammer 33. Die Brennkammer 33 umfasst eine im Bereich der Mittelachse 41 angeordnete Nabe 34. Bei der Brennkammer 33 handelt es sich um eine Ringbrennkammer. Die Brennkammer 33 umfasst eine äußere Wand 42, in der sich ein Flansch 35 für einen Flammendetektor befindet. Die äußere Wand 42 der Ringbrennkammer 33 umfasst zudem eine obere Innenfläche 43 und eine untere Innenfläche 44.

Der distale Bereich 2 und der flexible Bereich 4, sowie ein Teil des proximalen Bereiches 3 des Boroskops 1a ist durch den Flansch 35 durch die äußere Wand 42 in das innere der Ringbrennkammer 33 eingeführt worden. An den proximalen Bereich 3 schließen sich im Rahmen des flexiblen Bereiches 4 zunächst eine Anzahl Segmente 5g mit abgeschrägter Grundfläche und/oder abgeschrägter Deckfläche an. In Richtung des distalen Bereiches 2 schließen sich an die Segmente 5g weitere Segmente 5f an, bei denen die Grundfläche und die Deckfläche zueinander parallel verlaufen.

In der Figur 5 ist das Boroskop 1a bei angespannten internen Drahtseilen 7 und 8 dargestellt. Die Anordnung der Segmente 5g und 5f bewirkt, dass das Boroskop 1a im angespannten Zustand eine V-Form annimmt. Der distale Bereich 2, in dem sich zum Beispiel eine Videokamera befindet, zeigt dabei nach oben zur oberen Innenfläche 43 der Brennkammer 33.

Die Figur 6 zeigt schematisch ein in die bereits im Zusammenhang mit der Figur 5 beschriebene Ringbrennkammer 33 eingeführtes erfindungsgemäßes Boroskop 1b, welches sich zur Inspektion des unteren Bereichs der Brennkammer 33 eignet. Der distale Bereich 2 und der flexible Bereich 4, sowie ein Teil des proximalen Bereiches 3 sind durch den Flansch 35 in das Innere der Brennkammer 33 eingeführt worden. Die Segmente 5 des flexiblen Bereiches 4 sind so ausgestaltet, dass sich der flexible Bereich im angespannten Zustand der Zugseile 7, 8 bogenförmig um die Nabe 34 herum anordnet. Der distale Bereich 2 und die in diesem Bereich angeordnete Videokamera, beziehungsweise ein in diesem Bereich angeordneter Sensor, befinden sich dabei im Bereich der unteren Innenfläche 44 der Ringbrennkammer 33. Mit Hilfe der in der Figur 8 gezeigten Anordnung kann der untere Bereich der Brennkammer 33, insbesondere die untere Innenfläche 44, untersucht werden.

Im Folgenden wird das Einführen eines insbesondere zur Untersuchung des oberen Bereiches einer Brennkammer 33 geeigneten Boroskops 1a in die Brennkammer 33 anhand der Figuren 7 und 8 näher erläutert. Die Figuren 7 und 8 zeigen die bereits im Zusammenhang mit den Figuren 5 und 6 beschriebene Ringbrennkammer 33 mit der in ihrem Inneren angeordneten Nabe 34.

In einem ersten Schritt wird durch den Flansch 35 zunächst der distale Bereich 2 und anschließend sukzessive der flexible Bereich 4 in das Innere der Brennkammer eingeschoben. Dabei wird das externe Drahtseil 6 sukzessive straff gezogen sobald der distale Bereich 2 und etwa die Hälfte der Länge des flexiblen Bereiches 4 in das Innere der Brennkammer 33 eingeschoben sind. Nachdem der flexible Bereich 4 vollständig in die Brennkammer 33 eingeführt wurde und das externe Drahtseil 6 vollständig straff gezogen wurde, hat das Boroskop 1a die in der Figur 7 gezeigte Form einer Schlaufe. Während des Einschiebens des distalen Bereiches 2 und des flexiblen Bereiches 4 sind die internen Drahtseile 7 und 8 gelockert, sodass sich die Segmente 5 in Bezug aufeinander frei bewegen können.

In einem zweiten Schritt wird das externe Drahtseil 6 langsam gelockert, während die internen Drahtseile 7 und 8 langsam angezogen beziehungsweise gestrafft werden. Dabei werden die Grundflächen und Deckflächen der jeweils benachbarten Segmente 5 fest aneinander gezogen und es stellt sich die durch die Form der Segmente 5 vorgegebene Geometrie des flexiblen Bereiches 4 des Boroskops 1a ein. Am Ende dieses Prozesses ist das externe Drahtseil 6 gelockert und die internen Drahtseile 7 und 8 sind vollständig angezogen, also in einem gespannten Zustand. Das Ergebnis ist in der Figur 8 gezeigt. Der distale Bereich 2 des Boroskops 1a zeigt nun in Richtung der oberen Innenfläche 43 der Brennkammer 33.

Das externe Drahtseil 6 kann mit Hilfe einer außerhalb der Brennkammer 33 angeordneten Winde 9 bedient, also aufgewickelt oder wieder abgewickelt, werden. In der Figur 7 ist das externe Drahtseil 6 vollständig auf die Winde 9 aufgewickelt. In der Figur 8 ist das externe Drahtseil 6 nahezu vollständig von der Winde 9 abgewickelt.

Mit Hilfe des soeben beschriebenen Verfahrens lässt sich der distale Bereich 2 des Boroskops 1a an der Nabe 34 elegant vorbeiführen. Ohne die beschriebene Anwendung des externen Drahtseiles 6 ließe sich mit Hilfe des Boroskops 1a ausschließlich der untere Bereich beziehungsweise die untere Innenfläche 44 der Brennkammer 33 untersuchen.

## Patentansprüche

1. Inspektionsvorrichtung (1), welche einen distalen Bereich (2), einen proximalen Bereich (3) und einen zwischen dem distalen Bereich (2) und dem proximalen Bereich (3) angeordneten flexiblen Bereich (4) umfasst, wobei der flexible Bereich (4) eine Anzahl zueinander beweglich angeordneter Segmente (5) umfasst,
**dadurch gekennzeichnet, dass**
mindestens ein externes Führungselement (6) außerhalb des flexiblen Bereiches (4) zwischen dem distalen Bereich (2) und dem proximalen Bereich (3) so angeordnet ist, dass der distale Bereich (2) mit Hilfe des externen Führungselements (6) in Bezug auf den proximalen Bereich (3) bewegbar ist.

2. Inspektionsvorrichtung (1) nach Anspruch 1,
**dadurch gekennzeichnet, dass**
das externe Führungselement (6) als Seil oder als Kette ausgestaltet ist.

3. Inspektionsvorrichtung (1) nach Anspruch 1 oder 2,
**dadurch gekennzeichnet, dass**
das externe Führungselement (6) an dem distalen Bereich (2) und/oder an dem proximalen Bereich (3) befestigt ist.

4. Inspektionsvorrichtung (1) nach einem der Ansprüche 1 bis 3,
**dadurch gekennzeichnet, dass**
der distale Bereich (2) und/oder der proximale Bereich (3) eine Anzahl zueinander beweglich angeordneter Segmente (5) umfasst.

5. Inspektionsvorrichtung (1) nach einem der Ansprüche 1 bis 4,
**dadurch gekennzeichnet, dass**
die Segmente (5) mit Hilfe mindestens eines internen Seiles (7, 8) miteinander verbunden sind.

6. Inspektionsvorrichtung (1) nach einem der Ansprüche 1 bis 5,
**dadurch gekennzeichnet, dass**
mindestens ein Segment (5) die Form eines Hohlzylinders mit einer Anzahl Öffnungen (31) in der Mantelfläche (37, 38) des Hohlzylinders.

7. Inspektionsvorrichtung (1) nach einem der Ansprüche 1 bis 6,
**dadurch gekennzeichnet, dass**
mindestens zwei Segmente (5) gelenkig und/oder formschlüssig miteinander verbunden sind.

8. Inspektionsvorrichtung (1) nach einem der Ansprüche 1 bis 7,
**dadurch gekennzeichnet, dass**
die Inspektionsvorrichtung (1) als Boroskop ausgestaltet ist.

9. Verfahren zum Positionieren einer Inspektionsvorrichtung (1) in einem Hohlraum, welche einen distalen Bereich (2), einen proximalen Bereich(3), einen zwischen dem distalen Bereich (2) und dem proximalen Bereich (3) angeordneten flexiblen Bereich (4) und mindestens ein externes Führungselement (6) umfasst, wobei das externe Führungselement (6) außerhalb des flexiblen Bereiches (4) zwischen dem distalen Bereich (2) und dem proximalen Bereich (3) angeordnet ist,
**dadurch gekennzeichnet, dass**
der distale Bereich (2) mit Hilfe des externen Führungselements (6) in Bezug auf den proximalen Bereich (3) bewegt wird.

10. Verfahren nach Anspruch 9,
**dadurch gekennzeichnet, dass**
der flexible Bereich (4) eine Anzahl zueinander beweglich angeordneter Segmente (5) umfasst, wobei die Segmente (5) mit Hilfe mindestens eines internen Seiles (7, 8) miteinander verbunden sind, und
- der distale Bereich (2) und der flexible Bereich (4) durch eine Öffnung (35) in einen Hohlraum eingeführt werden, wobei das interne Seil (7, 8) entspannt ist,
- der distale Bereich (2) mit Hilfe des externen Führungselements (6) an den proximalen Bereich (3) herangeführt wird,
- das interne Seil (7, 8) gespannt wird und **dadurch** der distale Bereich (2) von dem proximalen Bereich (3) entfernt wird.
